# FASCICULE DE BREVET EUROPEEN

(11) **EP 0 798 837 B1**
(45) Date de publication et mention de la délivrance du brevet: **19.06.2002**
(21) Numéro de dépôt: 97410033.1
(22) Date de dépôt: 19.03.1997
(51) Int. Cl.: H02G 5/06

(54) **Isolateur support pour un poste à haute tension isolé par un gaz isolant**
Stützisolator für eine gasisolierte Hochspannungsschaltanlage
Supporting insulator for a gasinsulated high voltage apparatus

(30) Priorité: 29.03.1996 FR 9604278
(43) Date de publication de la demande: 01.10.1997
(73) Titulaire: Schneider Electric High Voltage SA, 38050 Grenoble Cédex (FR)
(72) Inventeur: Martinet, Charles, 38050 Grenoble Cedex 09 (FR)
(74) Mandataire: Ritzenthaler, Jacques

(56) Documents cités:
- EP-A- 0 676 843
- DE-A- 2 526 671
- DE-A- 3 311 218
- FR-A- 2 526 577

## Description

L'invention est relative à un isolateur support destiné à être monté dans une cuve de blindage d'un poste à haute tension isolé par un gaz isolant à rigidité diélectrique élevée, ledit isolateur comportant :
- un corps isolant en résine moulée doté dans la zone centrale d'un organe porteur métallique, auquel est connecté le conducteur à haute tension,
- une bride de fixation métallique de forme annulaire, entourant la périphérie du corps isolant à l'opposé de l'organe porteur,
- et des moyens d'assemblage de la bride à la cuve de blindage, laquelle se trouve à un potentiel bas.

Un tel isolateur support est décrit dans les documents DE-A-2.624.908, EP-A-676843, EP-A-457.081 et EP-A-288.715. Les contraintes thermiques engendrées pendant la coulée de la résine et le retrait de la résine lors de la polymérisation peuvent faire apparaître des interstices au niveau des interfaces bride et corps isolant. La présence de ces interfaces perturbe la tenue diélectrique du poste et risque de diminuer le degré d'étanchéité avec des possibilités de fuite de gaz isolant.

Selon le document EP-A-676843, la bride de fixation métallique n'est pas intégrée dans le moule de formage de l'isolateur.

Le document DE 3311218 se rapporte à un isolateur support ayant une bride métallique surmoulée incorporée dans le moule avant l'opération de coulée. L'étanchéité entre l'isolateur et les tronçons élémentaires de la cuve est assurée par des joints logés dans des gorges sur les faces frontales opposées de l'isolateur. Il n'y a pas de joint dans l'interface entre l'armature métallique et le tenon de l'isolateur, et le retrait de la résine lors de la polymérisation peut affecter la régularité de l'interface.

L'objet de l'invention consiste à réaliser un isolateur support à bride de fixation métallique, ayant une bonne tenue mécanique et diélectrique.

L'isolateur support selon l'invention est caractérisé en ce que la la bride de fixation comporte:
- un trou de coulée pour l'introduction de la résine lors du moulage du corps isolant,
- une gorge ménagée dans chaque face interne située sous le trou de coulée,
- et un joint torique surmoulé dans chaque gorge, et destiné à assurer simultanément un effet de blocage de la bride par rapport au corps isolant, et une étanchéité supplémentaire au niveau de l'interface délimité par la bride et le corps.

Selon un mode de réalisation préférentiel chaque gorge possède une section en queue d'aronde, et une profondeur ayant une valeur inférieure au diamètre du joint, ce dernier faisant saillie de la face interne correspondante avant l'opération de coulée de la résine.

Selon une caractéristique de l'invention, les faces frontales de la bride de fixation comportent des rainures annulaires pour le logement de joints externes destinés à assurer l'étanchéité entre l'isolateur support, et les tronçons élémentaires de la cuve.

D'autres avantages et caractéristiques ressortiront plus clairement de la description qui va suivre d'un mode de réalisation de l'invention, donné à titre d'exemple non limitatif, et représenté aux dessins annexés dans lesquels :
- la figure 1 est une vue schématique en coupe verticale d'un isolateur support selon l'invention,
- la figure 2 montre une vue partielle en coupe et à échelle agrandie illustrant la bride de fixation avant l'opération de coulée de la résine ,
- la figure 3 est une vue identique de la figure 2 après la mise en place des joints, et après la coulée de la résine.

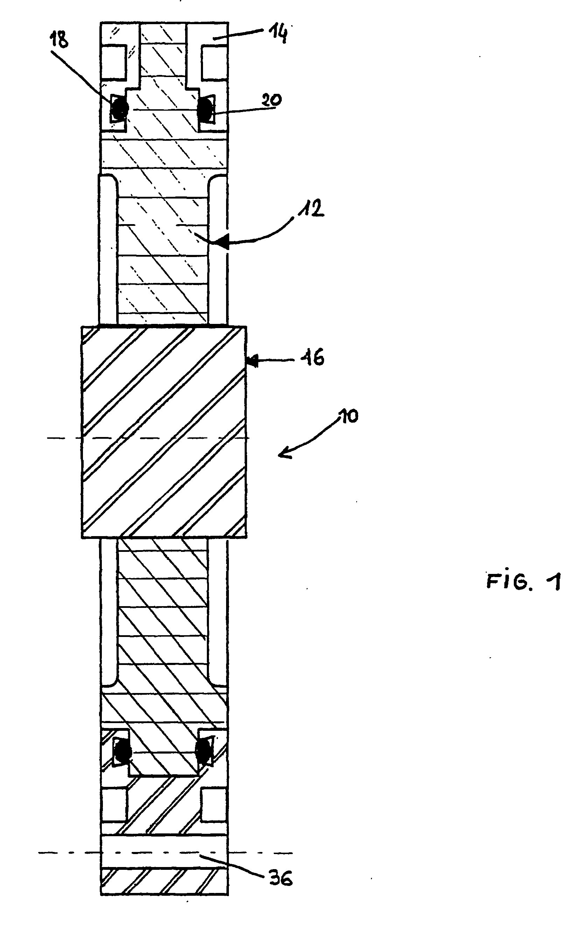

En référence à la figure 1, un isolateur support 10 pour un conducteur à haute tension, notamment utilisé dans un poste blindé à haute tension isolé par un gaz isolant à rigidité diélectrique élevée, comporte un corps 12 isolant en résine moulée, associé à une bride de fixation 14 métallique de forme annulaire.

La partie centrale du corps 12 isolant est dotée dans la zone centrale d'un organe porteur 16 métallique, auquel est rapporté de chaque côté un élément du conducteur interne à haute tension (non représenté).

La bride de fixation 14 est séparée de l'organe porteur 16 par le corps 12 isolant, et sert à insérer l'isolateur support 10 entre deux tronçons élémentaires de la cuve de blindage (non représentée), laquelle se trouve à un potentiel bas, par exemple à la terre.

Le matériau métallique de la bride de fixation 14 et de l'organe porteur 16 est par exemple de l'aluminium. La résine constitutive du corps isolant 12 est par exemple de la résine époxyde mélangée avec des charges et un agent durcisseur.
La périphérie extérieure du corps 12 isolant est enveloppée sans jeu par la paroi interne de la bride 14 avec interposition de deux joints 18, 20 toriques surmoulés.

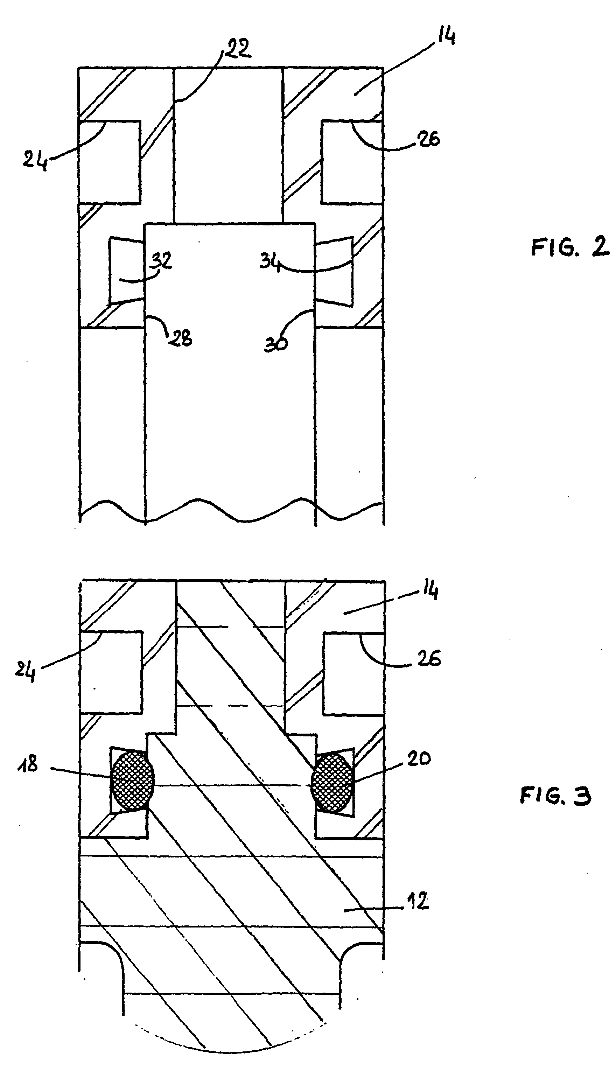

Sur la figure 2, la bride de fixation 14 annulaire comporte un trou de coulée 22 à la partie supérieure pour l'introduction de la résine lors du moulage du corps isolant 12. Les faces frontales opposées de la bride 14 sont équipées chacune d'une rainure 24, 26 annulaire pour le logement d'un joint externe (non représenté) destiné à assurer l'étanchéité entre l'isolateur support 10 et les tronçons élémentaires de la cuve de blindage.

Les faces internes 28, 30 opposées de la bride 14, situées sous le trou de coulée 22, comportent chacune une gorge 32, 34 de section trapézoïdale ou en queue d'aronde pour la réception des joints 18, 20 internes surmoulés. La profondeur des gorges 32, 34 est inférieure au diamètre des joints 18, 20, lesquels font saillie des faces internes 28, 30 avant l'opération de coulée de la résine. Le diamètre des joints 18, 20 est de l'ordre de 3 mm.

La présence des joints 18, 20 au niveau de l'interface bride 14 et corps isolant 12 permet un blocage efficace de la bride 14 par rapport au corps isolant 12, et assure simultanément l'étanchéité pour éviter tout échappement de gaz isolant.

Les différentes étapes de mise en oeuvre de l'isolateur support 10 selon l'invention s'effectue de la manière suivante :

La bride de fixation 14 subit un dégraissage préalable, suivi par la mise en place des deux joints 18, 20 toriques dans les gorges 32, 34 correspondantes. Le matériau des joints 18, 20 est choisi pour conserver les caractéristiques mécaniques pendant l'opération de coulée de la résine.

Dans une deuxième phase intervient une mise en étuve de la bride 14, laquelle est chauffée à une température voisine de celle de la résine liquide au moment de la coulée.

Au cours de la troisième phase, la bride 14 préchauffée est introduite dans un moule de formage, et après fermeture de ce dernier, ou procède ensuite à l'opération de coulée pour le remplissage de l'espace interne du moule. La coulée de résine s'effectue à une température de 110° C, ce qui réduit l'effet de retrait radial de la résine à une valeur minimum. La résine remplit l'espace interne délimité par la bride 14, y compris le trou de coulée 22 (figure 3).

La polymérisation de la résine intervient au cours de la quatrième phase de cuisson, laquelle dure pendant trois heures environ.

Le démoulage est opéré à la fin de la période de polymérisation, suivi du refroidissement et des opérations de contrôle et d'emballage.

En fonction des contraintes thermiques, la déformation différentielle des joints 18, 20 à l'intérieur des gorges 32, 34 en queue d'aronde de la bride de fixation 14 permet une réduction du retrait de la résine au moment de la polymérisation. Il en résulte un blocage efficace de la résine du corps 12 sur la bride 14 surmoulée, et une étanchéité supplémentaire vis-à-vis de l'extérieur de la cuve, et entre les compartiments.

Sur la figure 1, la bride de fixation 14 est percée par des trous 36 autorisant le passage de vis d'assemblage de l'isolateur 10 à la cuve de blindage.

## Revendications

1. Isolateur support (10) destiné à être monté dans une cuve de blindage d'un poste à haute tension isolé par un gaz isolant à rigidité diélectrique élevée, ledit isolateur comportant :
- un corps (12) isolant en résine moulée doté dans la zone centrale d'un organe porteur (16) métallique, auquel est connecté le conducteur à haute tension,
- une bride de fixation (14) métallique de forme annulaire, entourant la périphérie du corps (12) isolant à l'opposé de l'organe porteur (16),
- et des moyens d'assemblage de la bride (14) à la cuve de blindage, laquelle se trouve à un potentiel bas,
**caractérisé en ce que** la bride de fixation (14) comporte:
- un trou de coulée (22) pour l'introduction de la résine lors du moulage du corps isolant (12),
- une gorge (32, 34) ménagée dans chaque face interne (28, 30) située sous le trou de coulée (22),
- et un joint (18, 20) torique surmoulé dans chaque gorge, et destiné à assurer simultanément un effet de blocage de la bride (14) par rapport au corps (12) isolant, et une étanchéité supplémentaire au niveau de l'interface délimité par la bride (14) et le corps (12).

2. Isolateur support selon la revendication 1, **caractérisé en ce que** chaque gorge (32, 34) possède une section en queue d'aronde, et une profondeur ayant une valeur inférieure au diamètre du joint (18, 20), ce dernier faisant saillie de la face interne (28, 30) correspondante avant l'opération de coulée de la résine.

3. Isolateur support selon la revendication 1 ou 2, **caractérisé en ce que** les faces frontales de la bride de fixation (14) comportent des rainures (24, 26) annulaire pour le logement de joints externes destinés à assurer l'étanchéité entre l'isolateur support (10), et les tronçons élémentaires de la cuve.

4. Isolateur support selon la revendication 1 ou 2, **caractérisé en ce que** la bride de fixation (14) comporte une ouverture (36) s'étendant parallèlement dans la direction axiale du conducteur central.

## Patentansprüche

1. Stützisolator (10) zum Einbau in ein Kapselungsrohr einer, mit einem Isoliergas hoher dielektrischer Festigkeit isolierten Hochspannungsstation, welcher Isolator
- einen Gießharz-Isolierkörper (12), in dessen Mittelteil ein metallischer Tragkörper (16) ausgebildet ist, an den der Hochspannungsleiter angeschlossen ist,
- einen ringförmigen metallischen Befestigungsflansch (14), der den Randbereich des Isolierkörpers auf der dem Tragkörper (16) abgewandten Seite umschließt,
- sowie Mittel zur Verbindung des Flansches (14) mit dem auf einem niedrigen Potential liegenden Kapselungsrohr umfaßt,
**dadurch gekennzeichnet, daß** der Befestigungsflansch (14)
- ein Eingußloch (22) zum Einfüllen des Harzes beim Gießen des Isolierkörpers (12),
- eine an jeder Innenseite (28, 30) unterhalb des Eingußlochs (22) angeordnete Kehle (32, 34),
- sowie einen in jede Kehle eingelegten Einguß-Dichtungsring (18, 20) umfaßt, der dazu dient, eine Blockierwirkung zwischen Flansch (14) und Isolierkörper (12) sowie gleichzeitig eine erhöhte Dichtigkeit der Stoßstelle zwischen Flansch (14) und Isolierkörper (12) zu gewährleisten.

2. Stützisolator nach Anspruch 1, **dadurch gekennzeichnet, daß** jede Kehle (32, 34) einen schwalbenschwanzförmigen Querschnitt sowie eine Tiefe aufweist, deren Wert kleiner ist als der Durchmesser der Dichtung (18, 20), so daß diese Dichtung vor dem Einfüllen des Gießharzes aus der jeweiligen Innenseite (28, 30) hervorsteht.

3. Stützisolator nach Anspruch 1 oder 2, **dadurch gekennzeichnet, daß** an den Vorderseiten des Befestigungsflansches (14) ringförmige Nuten (24, 26) zur Aufnahme externer Dichtungen ausgebildet sind, die dazu dienen, die Dichtigkeit zwischen dem Stützisolator (10) und den Teilabschnitten des Kapselungsrohrs zu gewährleisten.

4. Stützisolator nach Anspruch 1 oder 2, **dadurch gekennzeichnet, daß** der Befestigungsflansch (14) eine Bohrung (36) aufweist, die parallel zur Längsachse des Mittelleiters verläuft.

## Claims

1. A support insulator (10) designed to be fitted in a metalclad tank of a high-voltage sub-station insulated by a high dielectric strength insulating gas, said insulator comprising:
- an insulating body (12) made of moulded resin provided in the central zone with a metal carrying means (16) whereto the high-voltage conductor is connected,
- an annular-shaped metal fixing flange (14) surrounding the periphery of the insulating body (12) opposite the carrying means (16),
- and means for assembling the flange (14) to the metalclad tank that is at a low potential,
**characterized in that** the fixing flange (14) comprises:
- a tapping hole (22) for introducing the resin when the insulating body (12) is moulded,
- a throat (32, 34) arranged in each internal face (28, 30) situated under the tapping hole (22),
- and an O-ring (18, 20) moulded from casting in each throat and designed to simultaneously achieve a blocking effect of the flange (14) with respect to the insulating body (12) and an additional tightness at the level of the interface defined by the flange (14) and body (12).

2. The support insulator according to claim 1, **characterized in that** the each throat (32, 34) has a dovetailed section and a depth having a value less than the diameter of the O-ring (18, 20), the latter protruding out from the corresponding internal face (28, 30) before the resin casting operation is performed.

3. The support insulator according to claim 1 or 2, **characterized in that** the front faces of the fixing flange (14) comprise annular grooves (24, 26) for housing external seals designed to achieve the tightness between the support insulator (10) and the elemental sections of the tank.

4. The support insulator according to claim 1 or 2, **characterized in that** the fixing flange (14) comprises an opening (36) extending in parallel manner in the axial direction of the central conductor.
